# EUROPEAN PATENT SPECIFICATION

(11) **EP 0 485 600 B1**
(45) Date of publication and mention of the grant of the patent: **12.04.1995**
(21) Application number: 90908665.4
(22) Date of filing: 30.05.1990
(51) Int. Cl.: B60R 21/16

(54) **AIR BAG IN AIR BAG UNIT**
LUFTSACK IN LUFTSACKEINRICHTUNG
COUSSIN PNEUMATIQUE GONFLABLE POUR INSTALLATION DE SECURITE ANTI-COLLISION

(43) Date of publication of application: 20.05.1992
(73) Proprietor: TAKATA KABUSHIKI KAISHA, Minato-ku, Tokyo 106 (JP)
(72) Inventor: NAKAYAMA, Yoshikazu 477-26, Inabe-cho, Shiga 521-11 (JP)
(74) Representative: Bubb, Antony John Allen
(86) International application number: JP9000701
(87) International publication number: WO9118766

(56) References cited:
- FR-A- 2 170 337
- FR-A- 2 212 799
- JP-A- 5 741 235
- JP-A- 5 766 043
- JP-U- 4 839 637
- JP-U-62 141 562
- US-A- 3 715 131
- US-A- 3 799 573

## Description

The present invention relates to an air bag unit for protecting an occupant in a vehicle by inflating an air bag with high-pressure gas at vehicle collision, and in particular to an air bag, of which a mounting base is attached to an air bag support member by fasteners.

An air bag unit provided in a fixed portion of a car body in front of a driver's seat of an automobile plays an important part in protecting an occupant from being injured by colliding against the car body, by inflating instantly under the pressure of reaction gas from an inflator fixed to a steering wheel or a dashboard.

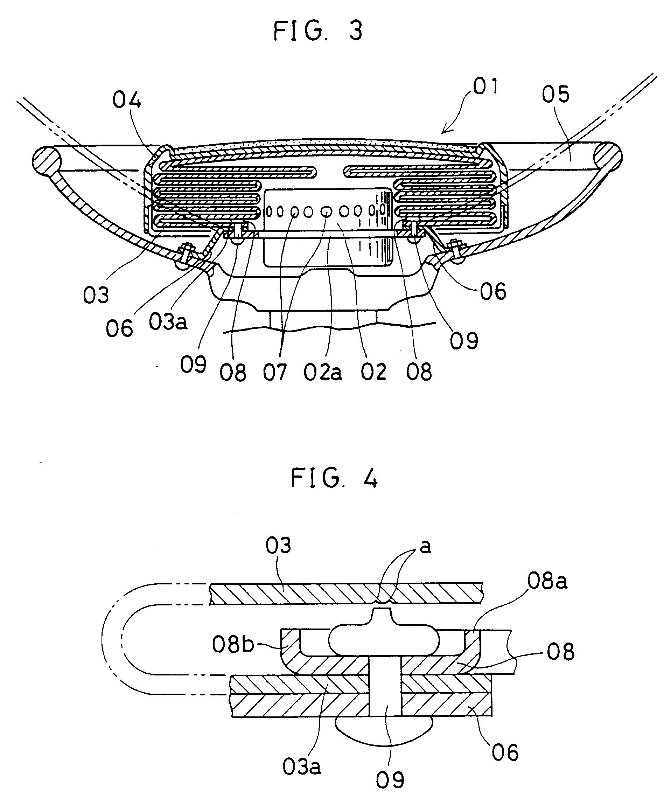

Fig.3 is a drawing of a conventional type of air bag unit.

As shown in Fig.3, an air bag unit 01 comprises an inflator 02 which discharges gas by triggering a gas generator in response to a collision signal sent from a collision detection sensor (not shown) when deceleration of the vehicle exceeds a certain value, and an air bag 03, whose mounting base 03a is fixed on an inflator 02 and which is inflated with gas from the inflator 02. With the air bag 03 folded up and tucked into a pad 04, the air bag unit 01 is mounted on a fixed portion of a car body such as the center of a steering wheel 05 by means of support fittings 06.

At vehicle collision, the gas generator in the inflator 02 is triggered very quickly, and the gas generated issues from nozzles 07 of the inflator 02 into the air bag 03. Thus, the air bag 03 is instantly inflated, as shown in Fig.3 by two-dot chain lines. The inflated air bag 03 then receives an occupant who is pushed forward by inertia, thus protecting the occupant from colliding against the car body.

Since tensile force is applied on the air bag 03 by the pressure of the reaction gas at air bag inflation and by inertia force of the occupant, it is necessary to mount the air bag 03 with relatively high mounting strength.

Therefore, in a conventional type air bag unit 01, a mounting base 03a of the air bag 03 is placed between the support fittings 06 and a ring-formed fitting 08, and the mounting base 03a of the air bag 03 is fastened tightly between the support fittings 06 and the ring-formed fittings 08 by appropriate fasteners 09 such as blind rivets or bolts. In this way, the whole mounting base 03a of the air bag 03 is supported firmly and uniformly by the ring-formed fitting 08.

Since the air bag 03 must receive the occupant securely when inflated, it must be very large. On the other hand, since the widest possible space must be secured in a small inner space of an automobile, the air bag must be folded up small size and must not be bulky when stored. Generally, it is folded up many times and stored in a pad 04 as shown in Fig. 3.

However, when a folded air bag 03 is stored, the air bag 03 inevitably touches the heads of fasteners 09. If the air bag 03 touches the heads of the fasteners 09, the air bag 03 may be danmaged as shown at a. Further, the damage may be increased by vibration of a running vehicle.

If the air bag 03 is damaged, the air bag 03 may not function reliably in an emergency.

To avoid this, the height of flanges 08a and 08b of inner and outer peripheral edges of the ring-formed fitting 08 could be made higher than the heads of fasteners 09 as shown in Fig.4. But if the flanges 08a and 08b were simply made higher, the space for storing the air bag 03 would be reduced. On the other hand, if the space for storing the air bag 03 were increased, the air bag unit 01 would become larger.

To solve the above problem, an object of the present invention is to provide an air bag which can be prevented from damage by the fasteners without requiring substantially increased space.

There is also known, see US-A-3,799,573 on which the preamble of the main claim is based, an air bag unit including an air bag attached to a support member by fasteners, said air bag being folded up when not in use and being arranged to be inflated with gas from an inflator which is operated in an emergency and a protecting member arranged to cover at least a head of each of said fasteners.

An air bag unit in accordance with the invention is characterised in that such a protecting member is formed by a folded part of the air bag, said folded part consisting of a portion of said air bag extending from a mounting base of the air bag and an opening in the air bag for inflator insertion, folded over the fasteners and attached to a part of the air bag on a side of the fasteners opposite the opening for inflator insertion.

In an air bag with the above arrangement, the fasteners for attaching the air bag are completely covered by the protecting member. Thus, the tips of the fasteners do not touch the air bag directly, and the air bag is prevented from being damaged. Accordingly, the air bag can function to the full extent.

Further, by forming a protecting member with a folded part extending from the mounting base of the air bag, the number of parts can be reduced.

Preferably, said mounting base of the air bag is fastened tightly between a ring-formed fitting and the support member and the said folded part of the air bag also covers said ring-formed fitting. Thus, when tensile force is applied on the mounting base at air bag inflation, it is possible to receive the force with ring-formed fitting since the mounting base of the air bag is fixed with the fasteners and the ring-formed fitting, and the ring-formed fitting is also covered with the portion extending from the mounting base of the air bag. Therefore, actual breaking strength and mounting strength of the air bag can be extensively increased.

### BRIEF DESCRIPTION OF THE DRAWINGS

Fig. 1 is a partially enlarged view near a mounting base of an embodiment of an air bag according to the present invention;
Fig. 2 is a partially enlarged view near a mount of this air bag, explaining how the air bag is mounted.
Fig. 3 is a cross-sectional view of a conventional type air bag unit installed on a steering wheel.
Fig. 4 is a partially enlarged view near a mounting base of an air bag in the conventional type air bag unit.

### DETAILED DESCRIPTION OF THE PREFERRED EMBODIMENT

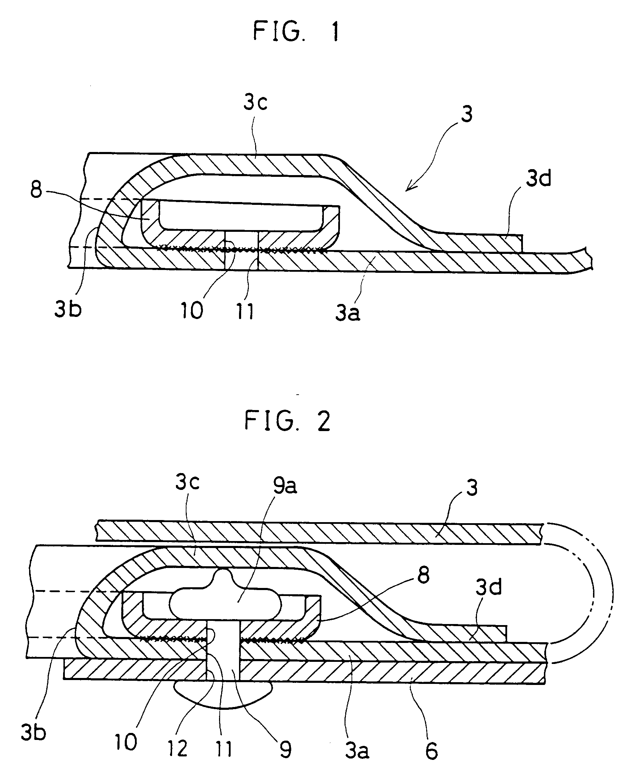

In an air bag shown in Fig. 1 as an embodiment of an air bag according to the present invention, the arrangement of the parts other than the shown parts of the air bag are almost the same as in the arrangement of a conventional type air bag shown in Fig. 3. Therefore, they are not explained in details here. For the same reason, the components in Fig. 1 are not explained either; their numbers correspond with those of the components of the conventional type air bag shown in Fig. 3, removing the letter "0" from the higher digit.

A ring-formed fitting 8 is either bonded or welded to a mounting base 3a of an air bag 3 as shown in Fig. 1. This ring-formed fitting 8 and the mounting base 3a are provided with holes 10 and 11 at the same position. In this case, the hole 10 is first provided in the ring-formed fitting 8, then the ring-formed fitting 8 is attached to the mounting base 3a of the air bag 3, and the hole 11 is then furnished on the mounting base 3a, so that its position is exactly the same as the hole 10 of the ring-formed fitting 8.

The area from the hole 11 of the air bag 3 to an opening for inflator insertion 3b of an inflator 2 is folded to cover the ring-formed fitting 8. An edge 3d of the folded part 3c is attached on the air bag 3 opposite to the side of the opening for inflator insertion 3b of the inflator 2 with respect to the hole 11 of the air bag 3.

To install an air bag with the above arrangement, a support fitting 6 is attached to a fixed part of a car body such as a steering wheel, then the ring-formed fitting 8 is placed on the support fitting 6 in such manner that the mounting base 3a of the air bag comes between the support fitting 6 and the ring-formed fitting 8, and that the positions of the hole 12 of the support fitting 6 and the hole 10 of the ring-formed fitting 8 agree with each other. In this case, if the positions of the hole 12 of the support fitting 6 and of the hole 10 of the ring-formed fitting 8 agree with each other, the position of the hole 11 in the mounting base 3a of the air bag automatically also agree since the mounting base 3a is attached to the ring-formed fitting 8. Therefore, the processes for installation are extensively simplified because there is no need to adjust the position of the hole 11 on the mounting base 3a of the air bag.

With the hole 12 of the support fitting 6 and the hole 10 of the ring-formed fitting 8 adjusted at the same position, a blind rivet 9 is inserted through the holes 10, 11 and 12, and then the head 9a of the blind rivet 9 is caulked. Since the blind rivet 9 tightly fastens the support fitting 6, the mounting base 3a of the air bag and the ring-formed fitting 8 together, the air bag 3 is tightly fitted to the support fitting 6. In this case, the support fitting 6 constitutes a support member of this embodiment of an air bag according to the present invention.

On the other hand, the head of the caulked part 9a of the blind rivet 9 is covered completely with the folded part 3c of the air bag 3. Therefore, the head of the caulked part 9a of the blind rivet 9 touches only the folded part 3c of the air bag 3 and not the other parts. Thus, the air bag is prevented from being damaged. Even if the folded part 3c of the air bag 3 is damaged by the head of the caulked part 9a of the blind rivet 9, the function of the air bag is not influenced since the folded part 3c is not related to the strength of the air bag 3 itself or the mounting strength of the air bag.

Thus, the folded part 3c of the air bag 3 constitutes a support member in this embodiment of the present invention.

Moreover, since the ring-formed fitting 8 is enfolded by the folded part 3c of the air bag 3, the tensile force applied on the air bag, for example at air bag inflation, is received by the entire ring-formed fitting 8. Thus, actual breaking strength of the air bag 3 is increased and actual mounting strength of the air bag 3 is also increased.

The present invention is not limited to the above embodiment, and various changes and modifications in design are possible.

For example, in the above embodiment, a mounting base 3a of an air bag 3 is attached to a support fitting 6, while a mounting base 3a may be attached to a fitting flange 2a for an inflator 2. In this case, the fitting flange 2a constitutes an air bag support member of the air bag according to the present invention.

In the above embodiment, a protecting member is formed by the folded part 3c of the air bag 3, that is, integrated in the air bag 3, while the protecting member may be formed as a separated member.

Further, a ring-formed fitting 8 may be formed by a plurality of disassembled pieces. In this case, however, additional processes are needed for attaching the ring-formed fitting 8 to the air bag 3, and it is preferable to form the ring-formed fitting 8 in one piece.

Further, instead of a blind rivet 9 used in the above embodiment, bolts and nuts may be used. In this case, the nut should be joined to the ring-formed fitting 8 beforehand.

### APPLICABILITY FOR THE INDUSTRY

The air bag in an air bag unit according to the present invention can be used on a vehicle and applied for the purpose of protecting the occupant by absorbing the shock, which occurs when the vehicle is collided.

## Claims

1. An air bag unit including an air bag (3) attached to a support member (6) by fasteners (9), said air bag (3) being folded up when not in use and being arranged to be inflated with gas from an inflator which is operated in an emergency, and a protecting member (3c) provided to cover at least a head (9a) of each of said fasteners (9), characterised in that said protecting member (3c) is formed by a folded part (3c) of said air bag (3), said folded part (3c) consisting of a portion of said air bag (3) extending from a mounting base (3a) of the air bag and an opening (3b) in the air bag for inflator insertion, folded over the fasteners (9) and attached to a part of the air bag (3) on a side of the fasteners (9) opposite the opening (3b) for inflator insertion.

2. An air bag according to Claim 1, wherein said mounting base (3a) of the air bag is fastened tightly between a ring-formed fitting (8) and said support member (6), and said folded part (3c) of said air bag (3) also covers said ring-formed fitting (8).

## Patentansprüche

1. Luftsackeinrichtung mit einem Luftsack (3), der mit Hilfe von Befestigungsgliedern (9) an einem Stützteil (6) befestigt ist, wobei der Luftsack (3) in der Nichtgebrauchsstellung zusammengefaltet und so ausgebildet ist, daß er mit Gas von einer Aufblaseinrichtung, die in einem Notfall betätigt wird, aufgeblasen wird, wobei ein Schutzteil (3c) vorgesehen ist, um wenigstens einen Kopf (9a) jedes Befestigungsteils (9) zu überdecken, dadurch gekennzeichnet, daß das Schutzteil (3c) durch einen gefalteten Abschnitt (3c) des Luftsacks (3) gebildet ist, wobei der Faltabschnitt (3c) aus einem Abschnitt des Luftsacks (3) besteht, der sich von einer Montagebasis (3a) des Luftsacks und einer Öffnung (3b) im Luftsack zum Einsetzen der Aufblaseinrichtung erstreckt und der über die Befestigungsglieder (9) gefaltet und an einem Teil des Luftsacks (3) auf einer Seite der Befestigungsglieder (9) befestigt ist, die der Öffnung (3b) zur Einsetzung der Aufblaseinrichtung gegenüberliegt.

2. Luftsackeinrichtung nach Anspruch 1, wobei die Montagebasis (3a) des Luftsacks dicht zwischen einem ringförmigen Formstück (8) und dem genannten Stützglied (6) befestigt ist, und wobei der angesprochene Faltabschnitt (3c) des Luftsacks (3) auch das ringförmige Formstück (8) überdeckt.

## Revendications

1. Dispositif à coussin pneumatique comprenant un coussin pneumatique (3) assujetti à un élément d'appui (6) par des organes de fixation (9), le coussin pneumatique (3) étant replié lorsqu'il n'est pas en service et étant agencé de façon à être gonflé avec du gaz fourni par un insufflateur qui entre en action en cas d'urgence, et un élément protecteur (3c) prévu pour couvrir au moins une tête (9a) de chacun des organes de fixation (9), caractérisé en ce que l'élément protecteur (3c) est formé par une partie repliée (3c) du coussin pneumatique (3), la partie repliée (3c) consistant en une portion du coussin pneumatique (3) qui, s'étendant à partir d'une base de montage (3a) du coussin pneumatique et présentant une ouverture (3b) ménagée dans le coussin pneumatique pour l'introduction d'un insufflateur, est repliée par-dessus les organes de fixation (9) et assujettie à une partie du coussin pneumatique (3) du côté des organes de fixation (9) opposé à l'ouverture (3b) destinée à l'introduction de l'insufflateur.

2. Dispositif à coussin pneumatique selon la revendication 1, dans lequel la base de montage (3a) du coussin pneumatique est serrée fermement entre un accessoire annulaire (8) et l'élément d'appui (6), et la partie repliée (3c) du coussin pneumatique (3) recouvre également l'accessoire annulaire (8).
